(19) Europäisches Patentamt
European Patent Office
Office européen des brevets

(11) **EP 3 217 157 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(51) Int Cl.:
***G01K 17/08*** *(2006.01)*

(21) Anmeldenummer: **17157753.9**

(22) Anmeldetag: **24.02.2017**

(54) **HEIZKOSTENVERTEILER UND VERFAHREN ZUR ERFASSUNG DER DURCH EINEN HEIZKÖRPER ABGEGEBENEN WÄRMEMENGE**

HEAT COST ALLOCATOR AND METHOD FOR MEASURING THE HEAT LOSS OF A RADIATOR

RÉPARTITEUR DE FRAIS DE CHAUFFAGE ET MÉTHODE DE DÉTERMINATION DE LA DÉLIVRANCE DE CHALEUR D'UN RADIATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.03.2016 DE 102016104225**

(43) Veröffentlichungstag der Anmeldung:
**13.09.2017 Patentblatt 2017/37**

(73) Patentinhaber: **Techem Energy Services GmbH 65760 Eschborn (DE)**

(72) Erfinder:
• **Kähler, Arne**
  **61350 Bad Homburg (DE)**
• **Klein, Joachim**
  **65760 Eschborn (DE)**
• **Wurl, Andreas**
  **61462 Königstein (DE)**

(74) Vertreter: **Keil & Schaafhausen Patent- und Rechtsanwälte PartGmbB Friedrichstraße 2-6 60323 Frankfurt am Main (DE)**

(56) Entgegenhaltungen:
EP-A2- 2 068 138   DE-A1- 3 243 198
DE-U1- 29 710 248

**Beschreibung**

Die Erfindung betrifft einen Heizkostenverteiler und ein Verfahren zur Erfassung der durch einen Heizkörper abgegebenen Wärmemenge nach dem Oberbegriff der Ansprüche 1 bzw. 9. Der Heizkostenverteiler weist einen Vorlauftemperatursensor zur Messung der Vorlauftemperatur eines Wärmeträgermediums vorzugsweise direkt am Vorlauf des Heizkörpers, einen Heizkörpertemperatursensor zur Messung einer Heizkörpertemperatur, wie insbesondere einer Rücklauftemperatur und/oder einer Heizkörperoberflächentemperatur sowie ggf. zusätzlich einer Raumtemperatur, auf. Eine Recheneinheit des vorgeschlagenen Heizkostenverteilers ist zur Bestimmung der abgegebenen Wärmemenge unter Verwendung der gemessenen Temperaturen eingerichtet.

Heizkostenverteiler sind weit verbreitet, um die Heizkosten insbesondere in einem Mehrfamilienhaus entsprechend dem Verbrauch auf die verschiedenen Parteien zu verteilen. Dazu sind die Heizkostenverteiler an den Heizkörpern des Hauses angebracht. Sie erfassen die von den einzelnen Heizkörpern abgegebene Wärmemenge. Die insgesamt entstehenden Heizkosten werden dann entsprechend einem Verteilschlüssel nach Grund- und Verbrauchskosten auf die Nutzeinheiten umgelegt.

In der Praxis werden im Wesentlichen zwei Typen von Heizkostenverteilern verwendet, die als 2-Fühler- oder 3-Fühler-Heizkostenverteiler bezeichnet werden.

Die 2-Fühler-Heizkostenverteiler messen eine Heizkörperoberflächentemperatur $\vartheta_{HK}$ und eine Raumtemperatur $\vartheta_{Raum}$ und berechnen hieraus eine logarithmische Übertemperatur $\Delta\log$

$$\Delta \log = k_{ges} \cdot (\vartheta_{HK} - \vartheta_{Raum}) \, , \qquad (1)$$

wobei $k_{ges}$ ein Faktor ist, der den Wärmeübergang zwischen dem Heizkörper und der Luft auf die jeweiligen Temperaturfühler berücksichtigt. Dieser Faktor $k_{ges}$ ist für den verwendeten Heizköper und Heizkostenverteiler bekannt. Die 2-Fühler-Heizkostenverteiler sind in der Praxis am weitesten verbreitet.

Ferner gibt es 3-Fühler-Heizkostenverteiler, die eine Vorlauftemperatur $\vartheta_{VL}$ des Wärmeträgermediums, eine Rücklauftemperatur $\vartheta_{RL}$ des Wärmeträgermediums und eine Raumtemperatur $\vartheta_{Raum}$ messen und hieraus eine logarithmische Übertemperatur $\Delta\log$

$$\Delta \log = \frac{\vartheta_{VL} - \vartheta_{RL}}{\ln\left(\dfrac{\vartheta_{VL} - \vartheta_{Raum}}{\vartheta_{RL} - \vartheta_{Raum}}\right)} \qquad (2)$$

berechnen.

Die abgegebene Wärmeleistung $\Delta Q$ pro Zeiteinheit $\Delta t$ ergibt sich unter Verwendung der logarithmische Übertemperatur $\Delta\log$ aus

$$\Delta Q = \Delta Q_N \cdot \left(\frac{\Delta \log}{\Delta \log_N}\right)^n \, , \qquad (3)$$

wobei $\Delta\log_N$ die logarithmische Übertemperatur bei Nennmassestrom, die Nennleistung $\Delta Q$ des Heizköpers und n der Heizkörperexponent sind. Diese Größen hängen von dem jeweils verwendeten Heizkörper ab und werden durch die Heizköperhersteller bekannt gegeben.

Der Vorteil dieser Heizkostenverteiler besteht darin, dass der Massestrom $\dot{m}$ respektive der Volumenstrom $\dot{V}$ des Wärmeträgermediums durch den Heizkörper nicht gemessen werden muss. Hierfür wäre der Einbau eines entsprechenden Durchflusszählers in das Rohrleitungssystem bspw. vor dem Heizkörper notwendig, was die Installation einer Heizkostenerfassung sehr aufwendig und teuer machen würde. Ein solcher Heizkostenverteiler, der ein Ventil unfasst und so gleichzeitig zur Regelung der Heizleistung verwendet werden kann, ist in der DE 297 10 248 U1 beschrieben. Dieser weist einen Vorlauftemperatursensor, einen Rücklauftemperatursensor und einen Differenzdrucksensor auf. Zur Ermittlung des Durchflusses durch den Heizkörper erfasst ein Sensorelement den Ventilhub des Ventils. In der DE 32 43 198 A1 wird erläutert, dass unter bestimmten Bedingungen, nämlich bei einer vorschriftsmäßigen Auslegung der Heizungsanlage und gleichen Drosselzuständen der Heizkörperventilen, Druckschwankungen alle Nutzer gleichermaßen betreffen sich und sich darüber hinaus in Grenzen halten.

Bei Heizkörpern ohne Volumenstrombestimmung besteht jedoch der Nachteil, dass die Heizkostenverteiler bei der Installation am Heizkörper entsprechend den Herstellerangaben parametriert werden müssen. Dies ist nicht nur fehleranfällig, sondern auch aufwendig, weil der Installateur entsprechend geschult sein und sich die Herstellerangaben für den betreffenden Heizkörper beschaffen muss. Letzteres ist insbesondere schwierig, wenn die Heizkostenverteiler nachträglich installiert werden und bspw. die Typenangaben und/oder der Hersteller des Heizkörpers nicht bekannt sind.

Die EP 2 068 138 A2 beschreibt ein Verfahren und eine Vorrichtung zur Bestimmung der Wärmeabgabe eines Heizkörpers, bei denen nur im Vorlauf oder nur im Rücklauf des Heizkörpers die Heizmediumtemperatur gemessen wird und eine den Durchfluss des Heizmediums parametrierende Größe erfasst wird. Aus diesen Größen sowie einer Raumtemperatur sowie dem Heizkörper gespeicherten Daten wird die Wärmeabgabe rechnerisch ermittelt. Zur Ermittlung des Durchflusses wird eine Stau- oder Differenzdruckmessvorichtung vorgeschlagen, weil diese zur Bestimmung des Durchflusses geeignete Größen sind, da sie von dem tatsächlichen Durchfluss abhängige Größen darstellen. Bei bekanntem Differenzdruck ist der Durchfluss dann eine eindeutige Funktion des Ventilhubs.

Vor diesem Hintergrund liegt die Aufgabe der Erfindung darin, eine Heizkosten- bzw. Verbrauchserfassung zur Heizkostenverteilung an einem Heizkörper vorzuschlagen, die weder den Einbau eines Durchflusszähler zur Messung des Volumenstroms $\dot{V}$ des Wärmeträgermediums noch die Parametrierung der Heizkostenverteiler mit Heizkörperspezifischen Daten erfordert.

Diese Aufgabe wird erfindungsgemäß mit den Merkmalen des Anspruchs 1 gelöst. Bei einem Heizkostenverteiler der eingangs genannten Art ist dazu insbesondere vorgesehen, dass der Heizkostenverteiler ein Heizkörperregelventil vorzugsweise im Vorlauf des Heizkörpers mit einer bekannten und ggfls. voreinstellbaren Betriebskennlinie für den Zusammenhang zwischen der Ventilhubstellung $h$ und dem Volumenstrom $\dot{V}$ bei einem bekannten Differenzdruck $\Delta p$ des Wärmeträgermediums über das Heizkörperregelventil umfasst, wobei der Differenzdruck $\Delta p$ über das Heizkörperregelventil im Arbeitspunkt des Heizkörperregelventils und außerdem die ggfls. vorgesehene Voreinstellung für die Betriebskennlinie bekannt ist/sind. Die optionale Voreinstellung für die Betriebskennlinie betrifft den Fall, dass ein Nenndurchfluss am Heizkörperregelventil einstellbar ist. In diesem Fall muss die Betriebskennlinie entsprechend angepasst werden. Dies kann auch der Auswahl der geeigneten Betriebskennlinie oder geeignete Parametrierung der Betriebskennlinie erfolgen.

Ferner weist der Heizkostenverteiler eine Einrichtung zur Ermittlung der Ventilhubstellung des Heizkörperregelventils auf. Die Recheneinheit des Heizkostenverteilers ist dazu eingerichtet, die abgegebene Wärmemenge $\Delta Q$ aus den Größen Ventilhubstellung h, Vorlauftemperatur $\vartheta_{VL}$ sowie Heizkörpertemperatur $\vartheta_{RL}, \vartheta_{HK}$ unter Verwendung der (ggfls. voreinstellbaren bzw. voreingestellten) Betriebskennlinie des Heizkörperregelventils für den bekannten Differenzdruck $\Delta p$ zu berechnen. Unter der "bekannten Betriebskennlinie" wird im Rahmen dieser Offenbarung im Folgenden insbesondere auch verstanden, dass die Betriebskennlinie an Voreinstellungen des Heizkörperregelventils (bspw. zur Nenndurchflussbegrenzung) anpassbar und anpasst, d.h. voreinstellbar und voreingestellt, ist, wenn der Heizkostenverteiler eingesetzt und das beschriebene Verfahren ausgeführt wird.

Optional kann der Heizkostenverteiler auch einen (gesonderten) Temperatursensor/Temperaturfühler zur Messung der Raumlufttemperatur $\vartheta_{Raum}$ aufweisen. Darüber hinaus kann ein Temperaturfühler zur Messung der Raumtemperatur $\vartheta_{Raum}$ Heizkörpertemperatursensor integriert sein. Die Raumlufttemperatur $\vartheta_{Raum}$ wird insbesondere benötigt, um aus einer Heizkörperoberflächentemperatur $\vartheta_{HK}$ eine Rücklauftemperatur $\vartheta_{RL}$ zu ermitteln.

Die abgegebene Wärmemenge $\Delta Q$ des Heizkörpers ist nach der hier verwendeten Definition der pro Zeiteinheit $\Delta t$ ermittelte Verbrauchsfortschritt $\Delta Q(\Delta t)$ (entsprechend einem Wärmemengeninkrement in der Zeiteinheit $\Delta t$).

$$\Delta Q = \Delta Q(\Delta t) = \rho \cdot c \cdot \Delta V(\Delta t) \cdot (\vartheta_{VL} - \vartheta_{RL}) \tag{4}$$

wobei

| | |
|---|---|
| $\rho$ | die Dichte des Wärmeträgermediums |
| $c$ | die spezifische Wärmekapazität des Wärmeträgermediums |
| $\Delta V(\Delta t)$ | das pro Zeiteinheit $\Delta t$ durch den Heizkörper (und damit auch durch das Heizkörperregelventil) strömende Volumen des Wärmeträgermediums |
| $\vartheta_{VL}$ | die ermittelte Vorlauftemperatur des Wärmeträgermediums |
| $\vartheta_{RL}$ | ist die ermittelte Rücklauftemperatur des Wärmeträgermediums |

sind. Der Faktor $\rho \cdot c$ wird in der Literatur auch mit einem annähernd konstanten Parameter k bezeichnet. Dieser ist alleine durch das verwendete Wärmeträgermedium bestimmt und beträgt für das übliche Wärmeträgermedium "Wasser" in guter Näherung bei üblicher Raumtemperatur k = 1.163 kWh / (m$^3$ K).

Die Vorlauftemperatur $\vartheta_{VL}$ und die Rücklauftemperatur $\vartheta_{RL}$ können direkt am Heizkörper gemessen werden. Die Rücklauftemperatur $\vartheta_{RL}$ kann erfindungsgemäß auch aus einer gemessenen Heizkörperoberflächentemperatur $\vartheta_{HK}$ berechnet werden, wie später noch detailliert beschrieben. Da sowohl die Heizkörperoberflächentemperatur $\vartheta_{HK}$ als

auch die Rücklauftemperatur $\vartheta_{RL}$ von der Bauart des Heizkörpers abhängen, weil sie durch die Wärmemengenabgabe $\Delta Q$ des Heizkörpers in seinem aktuellen Arbeitspunkt bestimmt wird, werden diese Temperaturen zusammenfassend auch als Heizkörpertemperaturen bezeichnet. Erfindungsgemäß fallen unter diesen Begriff "Heizkörpertemperaturen" alle Temperaturen, die mit der Wärmemengenabgabe des Heizkörpers bei einer vorgegeben Vorlauftemperatur des Wärmeträgermediums korreliert sind.

Es entspricht einer bevorzugten Ausführungsform der Erfindung, die Vorlauftemperatur $\vartheta_{VL}$ direkt am Vorlauf des Heizkörpers, insbesondere an dem Heizkörperregelventil, zu messen. Es ist jedoch bspw. auch möglich, eine Anlagenvorlauftemperatur an einer anderen Stelle des Systems zu messen und bspw. die Vorlauftemperatur $\vartheta_{VL}$ des Wärmeträgermediums am Heizkörper über ein an sich bekanntes Rohrleitungsmodell zu berechnen. Dies ist beispielsweise aus der VDI2077 grundsätzlich bekannt und wird hier nicht näher beschrieben.

Der Quotient $\Delta Q/\Delta t$ wird auch als Wärmemengenstrom Q bezeichnet. Entsprechend wird der Quotient $\Delta V/\Delta t$ auch als Volumenstrom $\dot{V}$ (des Wärmeträgermediums) bezeichnet.

In einem Zähler (Heizkostenverteiler) wird der Verbrauchsfortschritt $\Delta Q$ pro Zeiteinheit $\Delta t$ über die Zeit aufakkumuliert, so dass der für einen Zeitraum $\Delta T$ aufakkumulierte Verbrauchsfortschritt $\Delta Q(\Delta t)$ der im Zeitraum $\Delta T$ abgegebenen Wärmemenge $\Delta Q(\Delta T)$ entspricht:

$$\Delta Q(\Delta T) = \sum_{\Delta t=0}^{\Delta T} \Delta Q(\Delta t) \qquad (5)$$

Der Volumenstrom $\dot{V}$ des durch das Heizkörperregelventil (und damit auch durch den Heizkörper) strömenden Wärmeträgermediums (bzw. das Volumenstrominkrement $\Delta V$ in der Zeiteinheit $\Delta t$ lässt sich wie folgt bestimmen

$$\dot{V} = \frac{\Delta V}{\Delta t} = K_V(h, Voreinstellung) \cdot \sqrt{\Delta p}, \qquad (6)$$

wobei

$K_V$    der Durchflusskoeffizient der Öffnung des Heizkörperregelventils ist und damit den Zusammenhang zwischen der Ventilhubstellung $h$ und dem Volumenstrom $\dot{V}$ bei einem bekannten Differenzdruck $\Delta p$ des Wärmeträgermediums über das Heizkörperregelventil beschreibt, ggfls. unter Berücksichtigung einer vorgesehenen Voreinstellung des Heizkörperregelventils auf einen auswählbaren Nennmassestrom,

$h$    den Hub des Heizkörperregelventils beschreibt, wobei beispielsweise h=1 ein vollständig geöffnetes Heizkörperregelventil und h=0 ein vollständig geschlossenes Heizkörperregelventil beschreibt, und

$\Delta p$    der Differenzdruck über das Heizkörperregelventil ist.

Häufig wird in der Gleichung (6) noch ein weiterer, herstellerspezifischer Faktor $f_{Hersteller}$ mit angegeben, der hier jedoch der Übersichtlichkeit halber unterdrückt wurde und mit in $K_V$ enthalten ist. Im weiteren wird auch die Abhängigkeit des Durchflusskoeffizient $K_V$ von der *Voreinstellung* der Übersichtlichkeit halber nicht mehr durchgängig aufgeführt. Dies ist so zu verstehen, dass die *Voreinstellung* - sofern notwendig - in dem Durchflusskoeffizienten $K_V(h, Voreinstellung)$ bereits berücksichtigt ist. Nachfolgend wird vor allem dessen Abhängigkeit von dem Hub $h$ des Heizkörperregelventils betrachtet.

Das Produkt $K_V(h) \cdot \sqrt{\Delta p}$ wird auch als von den Parametern Hub $h$ und Differenzdruck $\Delta p$ abhängige (und ggfls. voreinstellbare) Betriebskennlinie des Heizkörperregelventils bezeichnet, wobei es für den Fachmann natürlich möglich ist, die Betriebskennlinie auch so zu definieren, dass bestimmte Abhängigkeiten, insbesondere von den Parametern $h$ und/oder $\Delta p$ als funktionaler Zusammenhang aus der Betriebskennlinie extrahiert sind. Auch dies wird in Rahmen der Erfindung als Betriebskennlinie bezeichnet. Nachfolgend und insbesondere in den Zeichnungen werden der Übersichtlichkeit halber aber Betriebskennlinien beschrieben werden, die unmittelbar den Zusammenhang zwischen den Volumenstrom $\dot{V}$ und den Parametern Hub $h$ und/oder Differenzdruck $\Delta p$ herstellen.

Der Differenzdruck $\Delta p$ über das Heizkörperregelventil ist die Druckdifferenz des Wärmeträgermediums gemessen vor und hinter dem bzw. über dem Heizkörperregelventil, die sich im Betrieb ergibt.

Das Heizkörperregelventil steuert oder regelt den Durchfluss je nach Wärmebedarf des Heizkörpers und/oder des Nutzers. So sind zum Beispiel mechanische Thermostat-Heizkörperregelventile (nachfolgend kurz auch als "Thermostatventil" bezeichnet) oder Raumtemperaturregelungen mit elektromotorischer Verstellung des Heizkörperregelventils bekannt, die abhängig vom Sollwert der Raumtemperatur und der aktuellen Ist-Raumtemperatur den Durchfluss des Wärmeträgermediums durch den Heizkörper so einstellen, dass sich die Ist-Raumtemperatur an einen an dem Thermostatventil oder der Raumtemperaturregelung eingestellten Raumtemperatursollwert angleicht.

Liegt die aktuelle Raumtemperatur unter dem Raumtemperatursollwert, öffnet das Heizkörperregelventil weiter, um einen höheren Masse- bzw. Volumenstrom des Wärmeträgermediums durch den Heizkörper zu erreichen. Entsprechend kann der Heizkörper eine größere Wärmemenge an den Raum abgeben, und die Raumtemperatur steigt.

Liegt umgekehrt die aktuelle Raumtemperatur über dem Raumtemperatursollwert, schließt das Heizkörperregelventil weiter, um einen niedrigeren Masse- bzw. Volumenstrom des Wärmeträgermediums durch den Heizkörper zu erreichen. Entsprechend kann der Heizkörper eine geringere Wärmemenge an den Raum abgeben, und die Raumtemperatur sinkt.

Nach der vorstehenden Gleichung (6) ergibt sich der Volumenstrom $\dot{V}$ (bzw. der daraus ableitbare Massestrom $\dot{m}$) also durch den über das Heizkörperregelventil abfallenden Differenzdruck $\Delta p$ und den Durchflusskoeffizienten (im Sinne eines Strömungswiderstands) der Öffnung des Heizkörperregelventils $K_V$.

Ein großer Vorteil bei Anwendung des erfindungsgemäßen Verfahrens zur Ermittlung der Verbrauchswerte bei der Heizkostenverteilung liegt darin, dass die Betriebskennlinie (die für die Parameter Hub $h$, Differenzdruck $\Delta p$ über das Heizkörperregelventil und für die ggfls. vorgesehene und bekannte Voreinstellung vorzugsweise unmittelbar den Volumenstrom $\dot{V}$ durch das Heizkörperregelventil in dem jeweiligen Arbeitspunkt des Heizkörpers im Heizungssystem liefert) von Eigenschaften des Heizkörpers völlig unabhängig ist. Diese Betriebskennlinie hängt nur von den Eigenschaften des Heizkörperregelventils ab, das erfindungsgemäß Teil des Heizkostenverteilers ist. Damit wird eine Heizkostenverteilung unabhängig von den Eigenschaften der Heizkörper, wie insbesondere dem Nenn-Wärmemengenstrom $\dot{Q}_N$ und dem Heizkörperexponenten $n$. Diese Größen müssen bei den derzeit üblichen Heizkostenverteilern, welche den Massestrom $\dot{m}$ bzw. Volumenstrom $\dot{V}$ des Wärmeträgermediums durch den Heizkörper nicht messen, bei dem Einbau immer bekannt sein und in den Heizkostenverteilern entsprechend parametriert werden. Dies stellt eine mögliche Fehlerquelle bei der Heizkostenverteilung dar und erfordert einen Einbau der Heizkostenverteiler durch entsprechende Spezialisten, die die notwendigen Parameter kennen und in die Heizkostenverteiler eingeben.

Durch die vorliegende Erfindung werden die Heizkostenverteiler von Parametern der Heizkörper unabhängig. Die notwendigen Parameter beschränken sich auf die Eigenschaften der Heizkörperregelventile, die dem Heizkostenverteiler bekannt sind, weil der Heizkostenverteiler und das Heizkörperregelventil eine - zumindest funktionale - Einheit darstellen. Vorzugsweise werden der Heizkostenverteiler und das Heizkörperregelventil in eine dem jeweiligen Heizkörper zugeordnete Temperaturregelung (insbesondere eine Einzelraum- oder RaumTemperaturregelung) integriert, so dass bspw. die eine gemeinsame Recheneinheit sowohl für die Heizkostenverteilung als auch für die Temperaturregelung verwendet werden kann. Vorteilhaft kann aber auch eine Ausführung sein, die eine getrennte Realisierung von Temperaturregelung und Heizkostenverteilung innerhalb eines Gerätes vorsieht. So wird ein Ausfall der Temperaturregelung nicht zu einem Ausfall der Heizkostenverteilfunktion führen.

Entsprechendes gilt insbesondere auch für die Messgrößen bzw. Variablen Vorlauftemperatur $\vartheta_{VL}$ und Hub $h$ des Heizkörperregelventils, die sowohl für die Heizkostenverteilung als auch für die Temperaturregelung benötigt werden.

Erfindungsgemäß lässt sich also eine im Stand der Technik bekannte Temperaturregelung, wie bspw. eine Einzelraumtemperaturregelung, welche die Temperatur durch Anpassung des Ventilhubs $h$ des Heizkörperregelventils an die gewünschte Solltemperatur anpasst, durch Vorsehen eines Vorlauttemperaturfühlers auf der Vorlaufseite des Heizkörperregelventils und eines Heizkörpertemperaturfühlers bei entsprechender Anpassung der Recheneinheit durch Programmcodemittel zu einen Heizkostenverteiler umrüsten. Teilweise verfügen diese Temperaturregelungen sogar bereits über einen entsprechenden Vorlauftemperaturfühler. Im Sinne dieser Beschreibung wird auch ein solches Kombigerät aus Temperaturregelung und Heizkostenverteiler als Heizkostenverteiler bezeichnet.

Die Betriebskennlinie für das Heizkörperregelventil ist bspw. durch den Hersteller bereits bekannt oder kann in einem Teststand für das Heizkörperregelventil durch Messung des Volumenstroms $\dot{V}$ für verschiedene Differenzdrücke $\Delta p$ und/oder Hubstellungen $h$ als Kennlinie oder Kennlinienfeld ermittelt und in einer geeigneten Parametrierung in der Recheneinheit des Heizkostenverteilers abgelegt werden, bspw. in Form einer Wertetabelle mit oder ohne Interpolationsmöglichkeiten. Dieses Vorgehen ist dem Fachmann bekannt und muss an dieser Stelle nicht daher näher beschrieben werden. Die Abhängigkeit der ggfls. vom Hersteller vorgesehenen Voreinstellung (z.B. Werte im Bereich 1 - 10) des Heizkörperregelventils ist dabei mit berücksichtigt. Für die nachfolgende Betrachtung wird eine solche Voreinstellung als konstant angesehen.

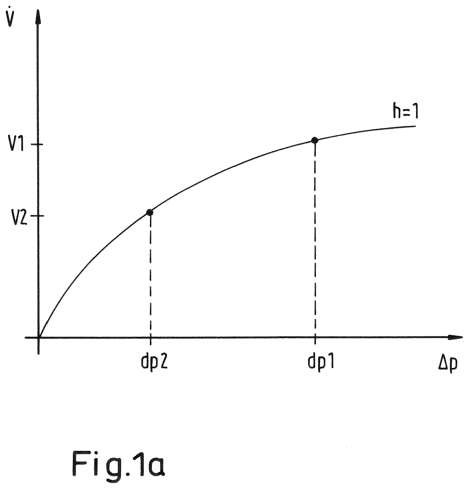

Fig. 1a zeigt schematisch die Betriebskennlinie eines Heizkörperregelventil bei vollständig geöffnetem Heizkörperregelventil, d.h. bei dem Ventilhub $h = 1$. Diese Betriebskennlinie stellt den Volumenstrom $\dot{V}$ in Abhängigkeit von dem über das Heizkörperregelventil abfallenden Differenzdruck $\Delta p$ bei dem Ventilhub $h = 1$ dar. Der über das Heizkörperregelventil abfallende Differenzdruck hängt von der Einbausituation in dem Heizungssystem, d.h. dem aus Vorlauf und Rücklauf bestehenden Rohrleitungssystem, ab, weil der an dem Zulauf des Heizkörperregelventils anliegende Druck des Wärmeträgermediums im Vorlauf des Heizkörpers von der Position des Heizkörperregelventils (respektive des Heizkörpers) in dem Heizungssystem abhängt. In der Einbausituation 1 liegt der Differenzdruck $\Delta p$ bei dem Wert $dp1$, und in der Einbausituation 2 liegt der Differenzdruck $\Delta p$ entsprechend bei dem Wert $dp2$. Daraus ergeben sich entspre-

chend verschiedene Volumenströme $\dot{V}$ mit den Werten $V1$ bzw. $V2$.

Wenn ausgehend von einen vollständig geöffneten Heizkörperregelventil, d.h. der Hubstellung $h = 1$, das Heizkörperregelventil geschlossen wird, erhöht sich der hydraulische Widerstand der (kleiner werdenden) Öffnung des Heizkörperregelventils und damit auch der Differenzdruck $\Delta p$ über das Heizkörperregelventil mit abnehmenden Ventilhub $h < 1$. In Folge vermindert sich insgesamt der Volumenstrom $\dot{V}$ durch das Heizkörperregelventil.

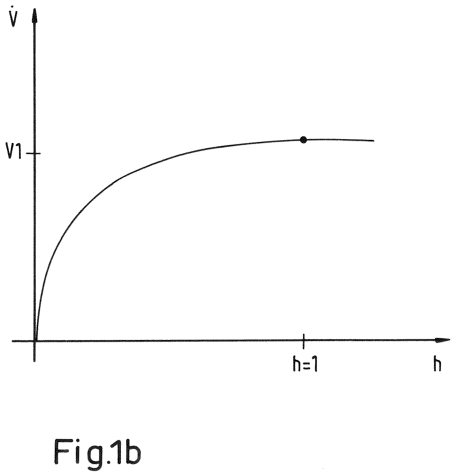

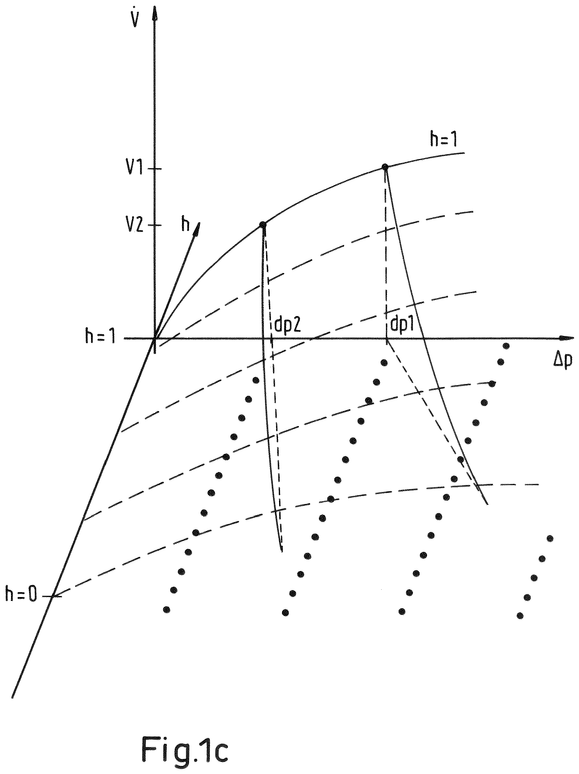

Eine schematische Betriebskennlinie hierfür ist ausgehend von dem Fall der Einbausituation 1 gemäß Fig. 1a in Fig. 1b dargestellt. Diese zeigt die Abhängigkeit des Volumenstroms $V$ von der Hubstellung $h$ für einen Differenzdruck $\Delta p$ mit dem Wert $dp1$ bei der Hubstellung $h = 1$. Für andere Werte des Differenzdrucks $\Delta p$ ergeben sich Fig. 1b entsprechende Kennlinien, die zu dem in Fig. 1c gezeigten Kennlinienfeld zusammengesetzt werden können. Fig. 1b stellt entsprechend die Projektion der im Punkt ($dp1$, $h = 1$, $V1$) beginnenden Kennlinie auf die Ebene $h$-$V$ dar. Gleiches gilt sinngemäß für die ggfls. vom Hersteller vorgesehene Voreinstellung des Ventils, die durch eine entsprechende Voreinstellung der Betriebskennlinie berücksichtigt wird.

In dem Kennlinienfeld gemäß Fig. 1c des Heizkörperregelventils kann für die in dem Arbeitspunkt bekannten Größen Hubstellung $h$ und Differenzdruck $\Delta p$ direkt der Volumenstrom $\dot{V} = \Delta V / \Delta t$ abgelesen bzw. ermittelt werden. Daraus kann dann gemäß Gleichung (6) direkt die durch den Heizkörper abgegebene Wärmemenge $\Delta Q$ berechnet werden, ohne dass der Nenn-Wärmemassenstrom des Heizkörpers bekannt ist oder der Massestrom m des Wärmeträgermediums entsprechend einem Wärmemengenzähler gemessen wird.

Es ist aus dem Stand der Technik bekannt, dass Heizkostenverteiler vor dem Heizkörperregelventil einen ersten Drucksensor und hinter dem Heizkörperregelventil einen zweiten Drucksensor aufweisen, wobei die Recheneinheit dazu eingerichtet ist, aus der Differenz des von dem ersten Drucksensor gemessenen Druckwerts und des von dem zweiten Drucksensor gemessenen Druckwerts den Differenzdruck $\Delta p$ zu berechnen.

Dies stellt eine Möglichkeit dar, einen bekannten Differenzdruck $\Delta p$ zu erhalten. In diesem Fall ist es allerdings notwendig, Drucksensoren vor und hinter dem Heizkörperregelventil zu integrieren, um die Druckdifferenz zu messen.

In einer weiteren aus dem Stand der Technik bekannten Ausführungsform kann vorgesehen werden, den Differenzdruck $\Delta p$ über das Heizkörperregelventil aus dem Messwert eines differenzdruckgebenden Sensors zu ermitteln, beispielsweise aus Strömungsmessungen.

In der erfindungsgemäß vorgeschlagenen Ausführungsform enthält das Heizkörperregelventil dagegen einen Differenzdruckregler, der unabhängig von dem im Heizungssystem und damit auch an dem Heizkörperregelventil anliegenden Anlagendruck den Differenzdruck $\Delta p$ über das Heizkörperregelventil konstant hält. Das Heizkörperregelventil mit Differenzdruckregler wird nachfolgend auch als Druck-unabhängiges Regelventil bezeichnet.

Derartige Druck-unabhängige Regelventile sind bekannt. Sie stellen den Differenzdruck $\Delta p$ über das Heizkörperregelventil unabhängig von dem Anlagendurch im Heizungssystem (Heizungsanlagendruck) am Heizkörperregelventil auf einen konstanten Wert ein, indem der in das Druck-unabhängige Regelventil integrierte Differenzdruckregler den Differenzdruck $\Delta p$ über das Heizkörperregelventil konstant hält. Aus Gleichung (6) folgt damit unmittelbar der Volumenstrom $\dot{V}$, weil der Differenzdruck $\Delta p$ über der Öffnung des Heizkörperregelventils konstant ist. Ein weiterer zu berücksichtigender Parameter ist die Voreinstellung am Heizkörperregelventil, die einer veränderbaren maximalen Öffnung des Ventiles entspricht.

Diese Zusammenhänge gelten zumindest für den Arbeitsdifferenzdruckbereich, der je nach Ventiltyp von etwa 5kPA (50 mbar) bis hin zu 15 kPA (150 mbar)reicht. Für eine typische Heizungsanwendung liegt der über dem Heizkörperegelventil benötige Differenzdruck $\Delta p$ typischer Weise in der Größenordnung von 10 kPA (100 mbar). Der Systemanlagendruck der Heizungsanlage hierfür sollte typischer Weise am Ventil mindestens 60 kPA (=600 mbar) betragen. Die Erfindung ist jedoch nicht eine auf bestimmte Dimensionierung der Regelventile und der Heizungsanlage beschränkt, weil das Prinzip grundsätzlich skalierbar ist.

Bekannte Regelventile dieser Art sind bspw. das Thermostat-Ventilunterteil Eclipse der Firma IMI Hydronic Engineering Deutschland GmbH, die Thermostatventil-Baureihe QV der Oventrop GmbH & Co. KG oder das druckunabhängige Regelventil AB-QM der Danfoss GmbH. Es aber auch möglich, ein derartiges Druck-unabhängiges Regelventil durch Vorsehen eines Differenzdruckreglers und eines Heizkörperregelventils als separat geschaltete Bauteile im Vorlauf zu dem Heizkörper vorzusehen, wobei der Differenzdruckregler als Regelgröße die Druckdifferenz über das Heizkörperregelventil konstant einstellt.

Der konstant eingeregelte Wert $dp$ des Differenzdrucks $\Delta p$ gilt im Sinne dieser Beschreibung im Rahmen der Regelabweichungen der verwendeten Regelventile als konstant. Die im Rahmen der Regelabweichungen vorkommenden Schwankungen sind für die hier beschriebene Anwendung vernachlässigbar.

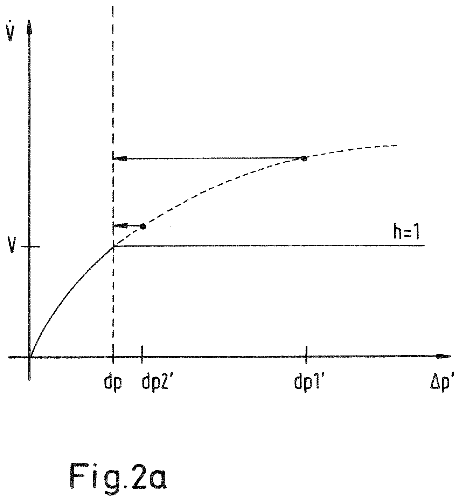

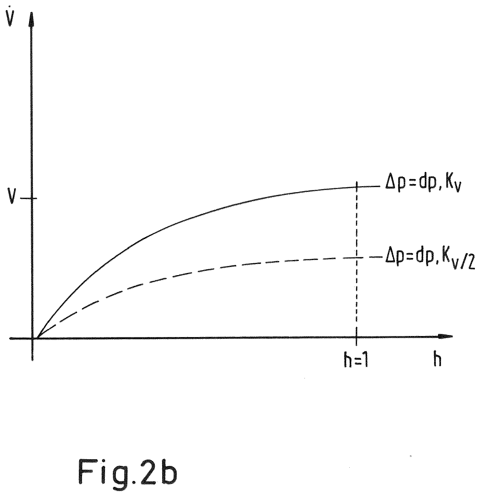

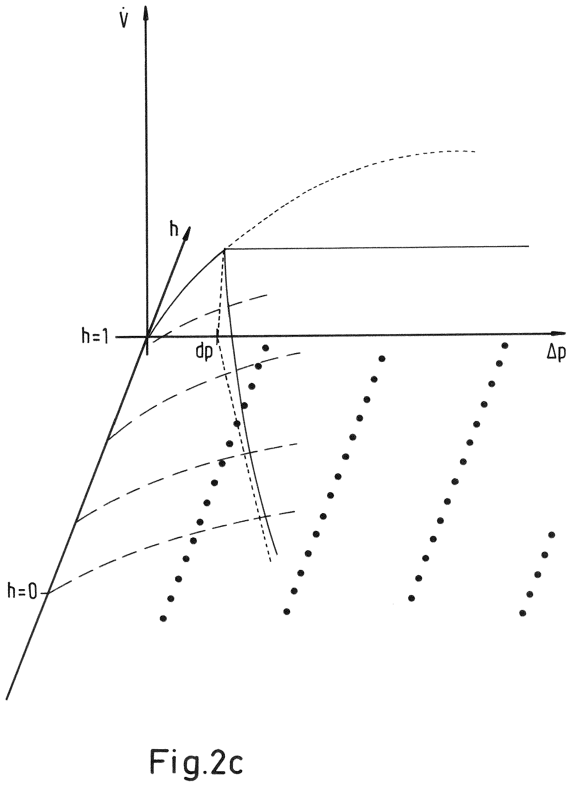

In diesem Fall (und für eine weiterhin konstante angenommene Voreinstellung) reduziert sich die in den Fig. 1a, 1b, 1c beschriebene Kennlinienschar auf eine Kennlinie, wie nachfolgend mit Bezug auf die Fig. 2a, 2b, 2c erläutert.

Fig. 2a stellt schematisch mit Hilfe des Schnittpunktes der dp-Betriebskennlinie mit dem Betriebspunkt dp den Fall dar, dass der Differenzdruck $\Delta p$ über das Heizkörperregelventil konstant auf dp eingestellt wird.

Durch den in das Druck-unabhängige Regelventil integrierten Differenzdruckregler wird der Differenzdruck $\Delta p$ auf den konstanten Wert $dp$ geregelt, der dann über den in das Heizkörperregelventil integrierten Differenzdruckregler anliegt. Dies ist in Fig. 2a durch die Pfeile angedeutet, welche den durch den Differenzdruckregler eingestellten Differenzdruck kennzeichnen.

Aufgrund des konstanten Differenzdrucks $\Delta p$ über dem (druckunabhängigen) Heizkörperregelventil weist dieses eine Ventilautorität von a=1 auf.

Der in Gleichung (6) aufgeführte Faktor $\sqrt{\Delta p}$ ist also konstant, so dass diese Abhängigkeit von dem Differenzdruck $\Delta p$ in dem Volumenstrom $\dot{V}$ verschwindet und lediglich als konstanter Faktor in die Betriebskennlinie eingeht. Damit kann die Abhängigkeit des Volumenstroms $V$ alleine als Funktion der Hubposition $h$ (und ggf. der hier nicht mehr gesondert gezeigten Voreinstellung) dargestellt werden. Dies ist in Fig. 2b anhand der durchgezogenen Line (für eine konstante Voreinstellung) gezeigt. Diese Betriebskennlinie gilt für alle Einbausituationen, in denen der Differenzdruck $\Delta p$ über das integrierte Heizkörperregelventil konstant ist, im erwähnten Beispiel also für den Wert $dp$.

Damit reduziert sich die Kennlinienschar gemäß Fig. 1c für diese besonders bevorzugte Ausführungsform auf die eine Betriebskennlinie, die in Fig. 2c noch eingezeichnet ist.

Erfindungsgemäß korreliert die in diesem Fall angewendete Betriebskennlinie also den variablen Ventilhub $h$ mit dem Volumenstrom $\dot{V}$, wobei der konstant gehaltene Wert $dp$ des über das integrierte Heizkörperregelventil abfallenden Differenzdrucks $\Delta p$ vorzugsweise bereits in der Betriebskennlinie enthalten ist, genauso wie eine mögliche Voreinstellung. Damit hängt die bevorzugte Betriebskennlinie in diesem Fall nur von dem Ventilhub $h$ des Heizkörperregelventils ab (Fig. 2b).

Erfindungsgemäß kann auch der Maximalhub des Druck-unabhängigen Heizkörperregelventils gegenüber dem bauartbedingten Maximalhub begrenzbar und einstellbar sein.

Diese Funktion sehen bspw. die vorgenannten Regelventile vor, die entsprechend voreinstellbar sind. Hierdurch lässt sich der Volumenstrom $\dot{V}$ (zumindest in vordefinierten Schritten) auf einen gewünschten maximalen Wert begrenzen. Die Begrenzung des Maximalhubs oder der Voreinstellung kann bspw. durch eine Einstellung an dem Regelventil vorgenommen werden, wobei sich die Einstellmöglichkeit vorzugsweise nur während des Einbaus des Regelventils bietet und während des normalen Betriebs durch einen bspw. verplombten Bereich gesichert ist, um eine Manipulation zu verhindern. Alternativ oder zusätzlich kann die Einstellmöglichkeit auch mit einer detektierbaren Kennung versehen sein, die über eine bspw. induktive, resistive, kapazitive, mechanische und/oder optische Kennung ein Auslesen der Einstellung durch die Recheneinheit ermöglicht, so dass die Recheneinheit die in der Verbrauchserfassung verwendete Betriebskennlinie $K_V(h, \text{Voreinstellung})$ automatisch anpassen kann und mögliche Änderungen an der Voreinstellung automatisch berücksichtigt werden.

Durch eine Begrenzung des Maximalhubs oder durch die Voreinstellung des Druck-unabhängige Regelventils kann der Durchfluss durch das Heizkörperregelventil begrenzt werden. In Gleichung (6) wird also der Faktor $K_V(h = h_{max}, \text{Voreinstellung})$ entsprechend verändert.

Hierdurch wird die in Fig. 2b gezeigte Kurve entsprechend angepasst, wobei aufgrund der Ventilautorität von a=1 und dem konstanten Wert $dp$ für den über dem Heizkörperregelventil abfallenden Differenzdruck $\Delta p$ eine Verkleinerung der Ventilöffnung um den Faktor 0,5 zu einer Verringerung des Durchflusskoeffizienten um 0,5 und damit zu einer Halbierung des Volumenstroms $\dot{V}$ führt. Eine entsprechend angepasste Kennlinie kann einfach erzeugt werden und ist in Fig. 2b als Beispiel für eine Halbierung der Öffnung durch Begrenzung des Maximalhubs gestrichelt eingezeichnet.

Auch in dieser Variante können die ersten und zweiten Drucksensoren oder alternativ ein differenzdruckgebender Sensor vorgesehen werden, um die Druckdifferenz $\Delta p$ zusätzlich zu messen. Dies erlaubt es, den für das Druck-unabhängige Regelventil benötigten Differenzdruck-Arbeitsbereich ($\Delta p_{max} > dp > dp_{min}$) zu überprüfen, entweder durch Messen des Differenzdrucks $\Delta p$ über das gesamte Regelventil und Vergleich mit dem vorgesehenen Arbeitsbereich oder durch Messen des Heizungsanlagendrucks an dem Heizkörperregelventil und Feststellen einer Abweichung von dem zulässigen Wert.

Bei einer Abweichung ist von einem Fehlerfall in der Heizungsanlage auszugehen. Bspw. kann eine Umwälzpumpe ausgefallen sein oder das Heizungssystem bspw. durch einen Schieber abgedreht sein. In der Regel findet dann kein geordneter Heizbetrieb mehr statt, weil kein ausreichender Wärmemittelmassestrom mehr bei dem Heizkörper ankommt und/oder die Vorlauftemperatur für ein Heizbetrieb nicht ausreicht.

In diesem Fall kann der Heizkostenverteiler das Heizkörperregelventil bspw. vollständig schließen und den Zählbetrieb einstellen. Alternativ kann der Masse- bzw. Volumenstrom auch mit einem reduzierten Wert abgeschätzt und die Heizkostenerfassung mit diesem Wert fortgesetzt werden. Aufgrund einer in diesem Fall kleinen oder sogar zu vernachlässigenden Vor- und Rücklauftemperaturdifferenz ergibt sich ohnehin meist ein kleiner oder kein Zählfortschritt des Heizkostenverteilers.

Um das Einhalten der für den Arbeitspunkt definierten Bedingungen zu plausibilisieren, kann die Recheneinheit des Heizkostenverteilers dazu eingerichtet sein, einen plausiblen Bereich für eine Heizkörpertemperatur $\vartheta_{RL}, \vartheta_{HK}$ aus dem ermittelten Ventilhub $h$, dem der Betriebskennlinie entsprechenden Volumenstrom $\dot{V}$, der Vorlauftemperatur $\vartheta_{VL}$

und einer typischen Heizlast zu bestimmen und mit der gemessenen (ermittelten) Heizkörpertemperatur $\vartheta_{RL}, \vartheta_{HK}$ zu vergleichen.

Dies stellt insbesondere einen Test dafür dar, dass der Differenzdruck $\Delta p$ über dem integrierten Heizkörperregelventil tatsächlich konstant auf den vorgegebenen Wert $dp$ geregelt ist. Nur wenn dieser Wert erreicht wird, stimmt der für die Heizkostenverteilung ermittelte Volumenstrom $\dot{V}$, und respektive der Massestrom $\dot{m} = \rho \cdot \dot{V}$, des Wärmeträgermediums.

Eine typische Heizlast (d.h. insbesondere eine Wärmemengenabgabe $\Delta Q$) für den Heizkörper kann bspw. aufgrund theoretischer Abschätzungen (ggf. in Kenntnis der Größe des Heizkörpers) und/oder selbstlernend auf Grundlage von Vergangenheitsverbrauchswerten ermittelt werden.

Unter Annahme dieser typischen Heizlast $\Delta Q/\Delta t$ kann aus Gleichung (4) eine erwartete Heizkörpertemperatur $\vartheta_{RL}, \vartheta_{HK}$ berechnet werden, um die herum ein bestimmter Toleranzbereich von (bspw. +/- 20% oder einem anderen geeignet gewählten Wert) angenommen wird, der dann als plausibler Bereich für die Heizkörpertemperatur $\vartheta_{RL}, \vartheta_{HK}$ angenommen wird. Fällt die ermittelte Heizkörpertemperatur $\vartheta_{RL}, \vartheta_{HK}$ in diesen plausiblen Bereich, wird das integrierte Heizkörperregelventil mit dem vorgesehenen Differenzdruck $\Delta p$ betrieben. Andernfalls liegt eine Störung vor, die ggf. angezeigt werden kann.

Anstelle einer Überprüfung anhand der Vor- und Rücklauftemperaturen $\vartheta_{RL}, \vartheta_{HK}$ kann die Überprüfung besonders bevorzugt auch anhand der Vor- und Rücklaufübertemperaturen erfolgen, welche die über der Raumtemperatur liegenden Temperaturen des Wärmeträgermediums im Vor- und Rücklauf des Heizkörpers beschreiben und die die für die Abgabe von Wärme an die Umgebung maßgeblichen Temperaturen sind.

Alternativ oder zusätzlich kann die bereits beschriebene Überprüfung des am Heizkörperregelventil anliegenden Drucks und/oder der über das Heizkörperregelventil abfallenden Differenzdrucks bei vollständig geöffnetem Heizkörperregelventil (d.h. einem Ventilhub von h=1) mittels des ersten und/oder des zweiten Drucksensors erfolgen. Auch dies erlaubt einen Rückschluss darauf, ob die Heizungsanlage in einem bestimmungsgemäßen Arbeitspunkt betrieben wird. Auch in diesem Fall kann andernfalls eine Störung ausgegeben werden. Die Recheneinheit des Heizkostenverteilers kann auch zur Durchführung dieser Überprüfung eingerichtet sein.

Gemäß einer Ausführungsform kann der Heizkörpertemperatursensor zur Messung der Heizkörpertemperatur einen Temperaturfühler zur Messung der Rücklauftemperatur $\vartheta_{RL}$ des Wärmeträgermediums am Rücklauf des Heizkörpers aufweisen.

Ferner kann vorgesehen sein, dass der Heizkörpertemperatursensor und/oder der Heizkostenverteiler zur Messung der Heizkörpertemperatur einen Temperaturfühler zur Messung der Raumtemperatur $\vartheta_{Raum}$ aufweist.

Vorzugsweise in Kombination mit einem Temperaturfühler zur Messung der Raumtemperatur $\vartheta_{Raum}$ kann der Heizkörpertemperatursensor zur Messung der Heizkörpertemperatur einen Temperaturfühler zur Messung der Heizkörperoberflächentemperatur $\vartheta_{HK}$ an einer definierten und insbesondere von dem Rücklauf des Heizkörpers verschiedenen Messposition des Heizkörpers aufweisen.

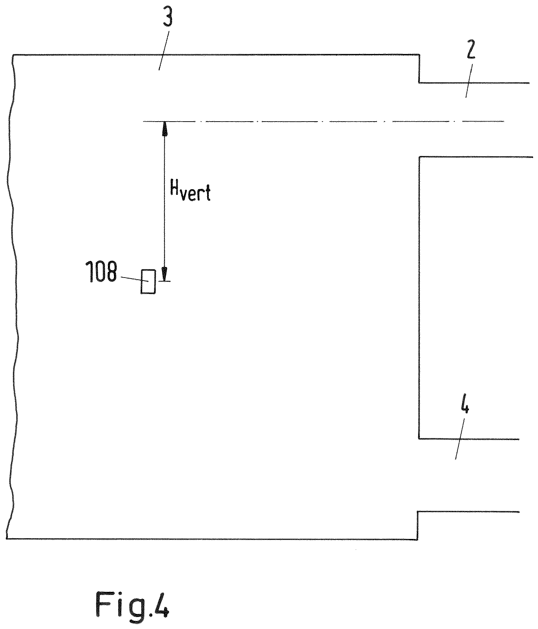

Aus einer solchen Messung kann auch auf die Rücklauftemperatur $\vartheta_{RL}$ zurückgeschlossen werden, wie anhand von Fig. 4 veranschaulicht. Diese zeigt schematisch einen Heizkörper 3 mit einem Vorlauf 2 und einen Rücklauf 4. Ein Temperaturfühler 108 misst als Anlegefühler die Oberflächentemperatur $\vartheta_{HK}$ des Heizkörpers in einer vertikalen Entfernung $h_{vert}$ von der Höhe des Vorlaufs 2. Für eine solche Messposition gilt folgender Zusammenhang der Rücklaufübertemperatur in Abhängigkeit von der Vorlauf-Übertemperatur:

$$\left(\vartheta_{RL} - \vartheta_{Raum}\right)^{h_{Vert}} = \frac{\vartheta_{HK} - \vartheta_{Raum}}{\left(\vartheta_{VL} - \vartheta_{Raum}\right)^{(1-h_{vert})}} \qquad (7)$$

Daraus kann mittels Logarithmisierung die Rücklauftemperatur gewonnen werden.

Die beiden Temperaturfühler, d.h. Temperaturfühler zur Messung der Heizkörperoberflächentemperatur oder der Rücklauftemperatur und der Temperaturfühler zur Messung der Raumlufttemperatur, können räumlich getrennt, auch in unterschiedlichen Gehäuseteilen des Heizkostenverteilers, angeordnet sein.

Der Temperaturfühler zur Messung der Raumtemperatur ist derart ausgebildet, dass er die Temperatur in dem den Heizkörper umgebenden Raum misst. Dazu ist der Temperaturfühler zur Messung der Raumtemperatur vorzugsweise derart in dem Gehäuse oder Gehäuseteil des Heizkostenverteilers angeordnet, dass kein direkter Wärmeleitkontakt zwischen der Oberfläche des Heizkörpers und/oder des Rohrleitungssystems für den Transport des Wärmeträgermediums und dem Temperaturfühler besteht. Dies kann bspw. dadurch erreicht werden, dass der Temperaturfühler entfernt von dem Heizkörper im Raum angeordnet ist oder über wärmeisolierende Materialen, wie bspw. Kunststoffe, in einem an dem Heizkörper und/oder dem Rohrleistungssystem befestigten Gehäuse gehalten wird. Dies ist bei bspw. auf der Heizkörperoberfläche montierten Heizkostenverteilern üblich.

Der Temperaturfühler zur Messung der Raumtemperatur kann erfindungsgemäß in einem Gehäuseteil des Heizkörpertemperatursensors, in einem Gehäuseteil des Vorlauftemperatursensors und/oder in einem Gehäuseteil einer Raumtemperaturregelung angeordnet sein. Der Vorlauftemperatursensor kann auch mit in ein Heizkörperregelventilgehäuse integriert sein.

Erfindungsgemäß kann die Recheneinheit dazu eingerichtet sein, aus der gemessenen Vorlauftemperatur $\vartheta_{VL}$, der gemessenen Rücklauftemperatur $\vartheta_{RL}$ und/oder der gemessenen Heizkörperoberflächentemperatur $\vartheta_{HK}$ durch Abziehen der gemessenen Raumtemperatur $\vartheta_{Raum}$ eine entsprechende Übertemperatur, d.h. eine Vorlaufübertemperatur, Rücklaufübertemperatur und/oder Heizkörperoberflächentemperatur zu berechnen. Diese Temperaturen sind bei der Ermittlung der durch den Heizkörper abgegebenen Wärmemenge vorteilhaft, weil die Differenz zu der den Heizkörper umgebenden Raumlufttemperatur betrachtet wird. Diese Differenz bestimmt das Maß der Wärmemengenabgabe durch den Heizkörper.

Zur Kombination eines Heizkostenverteilers mit einer Raumtemperaturregelung kann vorgesehen sein dass der Heizkostenverteiler einen elektromotorischen Stellantrieb zur Einstellung des Ventilhubs $h$ des Heizkörperregelventils und eine Recheneinheit aufweist, die dazu eingerichtet ist, die mit einem Raumtemperaturfühler gemessene Raumtemperatur $\vartheta_{Raum}$ mit einem vorgegebenen Sollwert für die Raumtemperatur $\vartheta_{Raum}$ zu vergleichen und eine sich aus dem Vergleich ergebende Regelabweichung durch Einstellung des Ventilhubs $h$ auszugleichen.

Derartige Raumtemperaturregelungen sind bekannt und müssen daher von ihrer Funktionsweise her nicht im Detail beschrieben werden. Diese Raumtemperaturregelungen sind häufig in das Ventilgehäuse eines Regelventils für den Heizkörper, insbesondere eines Heizkörperregelventils oder eines Differenzdruckunabhängigen Regelventils mit einem integrierten Heizkörperregelventil, aufgenommen und können so mit dem elektromotorischen Stellantrieb zur Einstellung des Ventilhubs auf einfache Weise verbunden werden. Ggf. ist in eine solche Raumtemperaturregelung auch bereits ein Vorlauftemperatursensor integriert.

Da die vorhandenen Sensoren auch für die Erfassung des Verbrauchsfortschritts eines Heizkostenverteilers benötigt werden, können diese vorhandenen Sensoren bei der erfindungsgemäßen Kombination von Raumtemperaturregelung und Heizkostenverteiler in einem auch als Heizkostenverteiler bezeichneten Kombinationsgerät in synergistischer Weise verwendet werden. Dies gilt auch für den Ventilhub des Heizkörperregelventils, der (in der bereits beschriebenen Weise) zur Ermittlung des Volumenstroms $\dot{V}$ bzw. Massestroms $\dot{m}$ des Wärmeträgermediums durch den Heizkörper herangezogen werden kann. Damit ist es möglich, einen Heizkostenverteiler vorzusehen, der die abgegebene Wärmemenge $\Delta Q$ des Heizkörpers unabhängig von dessen Kenngrößen, insbesondere unabhängig von einem Nenn-Wärmemengenstrom, ermitteln kann.

Auch die Recheneinheit des Heizkostenverteilers und der Raumtemperaturregelung kann in synergistischer Weise zusammen verwendet werden, indem sowohl das Verfahren zur Raumtemperaturregelung als auch das Verfahren zur Heizkostenverteilung in der gemeinsamen Recheneinheit implementiert ist.

Vorzugseise können die Raumtemperaturregelung und die Heizkostenverteilung in einem gemeinsamen Gehäuse des Heizkostenverteilers angeordnet sein, vorzugsweise als auf dem in den Vorlauf (oder ggf. dem Rücklauf) des Heizkre i-ses eingebundenen Ventilsitz des Heizkörperregelventils angebrachtes Gehäuse. Dies schließt eine Anordnung auf dem Ventilsitz des Differenzdruckunabhängigen Regelventils mit integriertem Heizkörperregelventil ein, das insoweit auch ein Heizkörperregelventil bildet. Eine solche Anordnung bietet sich an, weil die Raumtemperaturregelung den Ventilhub des Heizkörperstellventils betätigen muss. Grundsätzlich wäre es aber auch möglich, an dem Heizkörperregelventil nur einen elektromotorischen Antrieb vorzusehen, welcher kabelgebunden oder drahtlos (ggf. auch mittels einer Nahfeldkommunikation) mit dem Heizkostenverteiler respektive der Raumtemperaturregelung und/oder der Heizkostenverteilung des Heizkostenverteilers kommuniziert.

Es ist erfindungsgemäß jedoch auch möglich, die (Raum-)Temperaturregelung und die Heizkostenverteilung in separaten Gehäuseeinheiten vorzusehen, die kabelgebunden oder drahtlos miteinander kommunizieren. So könnte ein Gehäuse der Raumtemperaturregelung bspw. auf dem Ventilsitz des Heizkörperregelventils angeordnet sein und ein Gehäuse des Heizkostenverteilers in den Heizkörpertemperatursensor mit dem Heizkörpertemperaturfühler, also insbesondere mit dem Temperarturfühler zur Messung der Heizkörperoberflächentemperatur oder der Rücklauftemperatur. Diese Temperaturfühler können, wie auch bisher üblich, als Anlagefühler ausgebildet sein. Entsprechend kann als Heizkostenverteilergehäuse bspw. auch ein derzeit übliches Gehäuse verwendet werden, das bspw. auf der Heizkörperoberfläche montierbar ist und montiert wird.

Eine Funkkommunikation zwischen zwei oder mehr Gehäuseteilen erfolgt vorzugsweise synchronisiert, um Energie bei der Datenkommunikation einsparen, indem bei der synchronisierten Kommunikation die Sende- und Empfangszeitpunkte bekannt sind und sich die Sender und Empfänger zwischen den Sende- und Empfangszeitpunkten, d.h. in der kommunikationsfreien Zeit, ausschalten.

Es ist auch möglich, den Heizkostenverteiler als gekapselten und verplombten Bereich in einem erfindungsgemäß vorgeschlagenen Kombinationsgerät vorzusehen, um Manipulationen bei der Heizkostenverteilung zu vermeiden.

Um den Betrieb der Heizkostenverteilung insbesondere in einem Kombinationsgerät sicherzustellen, kann eine separate Energieversorgung vorgesehen sein, welche nur die zur Verbrauchskostenerfassung notwendigen Funktionen mit Strom versorgt.

Ein wichtiger Aspekt des erfindungsgemäß vorgeschlagenen Heizkostenverteilers betrifft die Energieversorgung für die Heizkostenverteilerfunktion, die eine Verbrauchserfassung über einen langen Einsatzzeitraum, bspw. etwa 10 Jahre, unterbrechungsfrei sicherstellen soll. Dies kann dadurch erreicht werden, dass zumindest die Energieversorgung des Heizkostenverteilers vorzugsweise durch eine Batterie erfolgt, welche nur die für die Heizkostenverteilung notwendigen Funktionen des Heizkostenverteilers mit Energie versorgt.

Dazu zählt insbesondere das Erfassen der zur Berechnung des Verbrauchsfortschritts notwendigen Größen, die bereits eingehend beschrieben wurden, das Berechnen des Verbrauchsfortschritts und das ausfallsichere Speichern des akkumulierten Verbrauchs respektive der abgegebenen Wärmemenge sowie das Auslesen der Verbrauchswerte. Bei einer drahtlosen Auslesung an bspw. einen Datensammler soll also auch das drahtlose Aussenden der Verbrauchswerte an den Datensammler durch die Energieversorgung über den vorgesehenen Einsatzzeitraum sichergestellt werden. Dies kann erfindungsgemäß in der gleichen Weise realisiert werden wie bei einem bekannten Heizkostenverteiler.

Zusatzfunktionen des erfindungsgemäß vorgeschlagenen Heizkostenverteilers bspw. im Rahmen der Raumtemperaturregelung werden erfindungsgemäß von einer zweiten Energieversorgung versorgt. Dies kann eine andere Batterie oder auch ein Anschluss an das Stromnetz sein. Es kann vorgesehen sein, dass die Basisfunktion des Geräts (einschließlich der Heizkostenverteilung) mit der dem Heizkostenverteiler zugeordneten Batterie (bzw. der separaten Energieversorgung) erfolgt und bei Aufruf einer darüber hinausgehenden Funktionalität auf die zweite Energieversorgung umgeschaltet wird, d.h. wenn eine über die Basisfunktion des Geräts hinausgehende Funktion aufgerufen wird. Diese Funktion wird erfindungsgemäß nur ausgeführt, wenn die zweite Energieversorgung ausreichend Energie liefert. Hierdurch wird die Funktionalität des Heizkostenverteilers über die gesamte Einsatzdauer sichergestellt.

Alternativ wäre es auch möglich, die separate Energieversorgung für die Heizkostenverteilung in der vorbeschrieben Dimensionierung vorzusehen und alle Funktionen des Heizkostenverteilers mit der zweiten Energieversorgung auszuführen, solange diese vorhanden ist. Erst bei Ausfall der zweiten Energieversorgung schaltet das Gerät in einen Basismodus, in dem nur die für die Heizkostenverteilung (bzw. allgemeiner Verbrauchserfassung) benötigten Funktionen ausgeführt werden und die Energie durch die separate Energieversorgung geliefert wird. Auch so kann die Heiz- bzw. Verbrauchskostenerfassung über den vorgesehen Einsatzzeitraum sichergestellt werden.

Vorzugsweise ist eine Batterie als zweite Energieversorgung durch jeden Benutzer wechselbar, wohingegen eine Batterie als separate Energieversorgung in einem gekapselten Gehäusebereich vorgesehen ist, so dass diese durch den Benutzer nicht entfernt werden kann, zumindest nicht ohne eine Verplombung zu brechen.

Entsprechend der vorstehenden Beschreibung bezieht sich die Erfindung auch auf ein Verfahren zur Erfassung der durch einen Heizkörper abgegebenen Wärmemenge $\Delta Q$ auf Grundlage einer gemessenen Vorlauftemperatur $\vartheta_{VL}$ und einer gemessenen Heizkörpertemperatur $\vartheta_{RL},\vartheta_{HK}$ des Wärmeträgermediums sowie ggf. einer gemessenen Raumtemperatur $\vartheta_{Raum}$ am Heizkörper. Es ist vorgesehen, dass der Ventilhub $h$ eines Heizkörperregelventils ermittelt wird und dass die abgegebene Wärmemenge $\Delta Q$ aus den Größen Ventilhubstellung $h$, Vorlauftemperatur $\vartheta_{VL}$, sowie Heizkörpertemperatur $\vartheta_{RL},\vartheta_{HK}$ und ggfls. Raumtemperatur $\vartheta_{Raum}$ unter Verwendung einer ggfls. voreinstellbaren Betriebskennlinie des Heizkörperregelventils und eines im Arbeitspunkt des Heizkörpers bzw. des Heizkörperregelventils bekannten Differenzdrucks $\Delta p$ des Wärmeträgermediums über das Heizkörperregelventil berechnet wird, wobei die ggfls. voreinstellbare Betriebskennlinie den Zusammenhang zwischen der Hubstellung $h$ und dem Volumenstrom $\dot{V}$ bei dem bekannten Differenzdruck $\Delta p$ und bei bekannter Voreinstellung herstellt.

Die im Zusammenhang mit dem vorgeschlagenen Heizkostenverteiler gegebenen Erläuterungen gelten in gleicher Weise für das Verfahren.

Gemäß dem beanspruchten Verfahren ist der Differenzdruck $\Delta p$ über das Heizkörperregelventil aufgrund der Verwendung eines in das Heizkörperregelventil integrierten Differenzdruckreglers unabhängig von dem anliegenden Anlagendruck des Heizungssystems konstant und bekannt.

Ferner kann überprüft werden, ob eine aus dem ermittelten Ventilhub $h$, dem der Betriebskennlinie entsprechenden Volumenstrom $\dot{V}$, der Vorlauftemperatur $\vartheta_{VL}$, und einer typischen Heizlast $\Delta Q$ ermittelte Heizkörpertemperatur $\vartheta_{HK},\vartheta_{RL}$ des Wärmeträgermediums innerhalb eines plausiblen Bereichs um die gemessene Ist-Heizkörpertemperatur $\vartheta_{HK},\vartheta_{RL}$ liegt.

Alle weiteren vorbeschrieben Aspekte des Verfahrens und seiner Durchführung in dem erfindungsgemäßen Heizkostenverteiler sind Gegenstand des erfindungsgemäßen Verfahrens, auch wenn diese hier nicht noch einmal gesondert beschrieben sind. Es ist insbesondere vorgesehen, dass das erfindungsgemäße Verfahren oder Teile hiervon in der Recheneinheit des Heizkostenverteilers zur Durchführung implementiert sind. Mit anderen Worten ist die Recheneinheit des Heizkostenverteilers zur Durchführung des erfindungsgemäßen Verfahrens oder Teilen hiervon eingerichtet.

Weitere Vorteile, Merkmale und Anwendungsmöglichkeiten der Erfindung ergeben sich auch aus dem nachfolgend mit Bezug auf die Zeichnung beschrieben Ausführungsbeispiel. Dabei gehören alle beschriebenen und/oder bildlich dargestellten Merkmale für sich oder in beliebiger Kombination zum Gegenstand der vorliegenden Erfindung, auch unabhängig von ihrer Zusammenfassung in den Ansprüchen oder deren Rückbezügen.

Es zeigen:

| Fig. 1 a, b, c | schematische Kennlinien zur Ermittlung des Volumenstroms $\dot{V}$ durch ein Heizkörperregelventil zur erfindungsgemäßen Verwendung bei der Ermittlung der durch einen Heizkörper abgegebenen Wärmemenge $\Delta Q$; |
|---|---|
| Fig. 2 a, b, c | schematische Kennlinien zur Ermittlung des Volumenstroms $\dot{V}$ durch ein Druck-unabhängiges Heizkörperregelventil mit integriertem Differenzdruckregler zur erfindungsgemäßen Verwendung bei der Ermittlung der durch einen Heizkörper abgegebenen Wärmemenge $\Delta Q$; |
| Fig. 3 | eine bevorzugte Ausführungsform eines erfindungsgemäßen Heizkostenverteilers; und |
| Fig. 4 | eine Schemaskizze zur Berechnung der Rücklauftemperatur aus einer Heizkörperoberflächentemperatur. |

In den Fig. 1a bis 1c sind Kennlinien bzw. Kennlinienfelder eines Heizkörperregelventils dargestellt, die den durch das Heizkörperregelventil fließenden Massestrom $\dot{m}$ in Abhängigkeit von der Ventilhubstellung $h$ des Heizkörperregelventils und dem über das Heizkörperregelventil abfallenden Differenzdruck $\Delta p$ zeigen.

Fig. 1a zeigt den Volumenstrom $\dot{V}$ bei einem vollständig geöffneten Heizkörperregelventil, d.h. der Hubstellung $h = 1$, in Abhängigkeit von dem über dem Heizkörperregelventil abfallenden Differenzdruck $\Delta p$, der insbesondere von der Einbausituation und dem im Heizungssystem herrschenden Druck des Wärmeträgermediums abhängt. Fig. 1b zeigt ausgehend von einer Einbausituation, und damit einem sich ergebenden Wert $dp$1 des Differenzdrucks $\Delta p$ den Volumenstrom $\dot{V}$, der sich abhängig von dem an dem Heizkörperregler bei geöffnetem Ventil ($h = 1$)) bei einem Schließen des Heizkörperregelventils ($h < 1$) ergibt.

Fig. 1c stellt das sich insgesamt ergebende Kennlinienfeld des Volumenstroms $\dot{V}$ für verschiedene Einbausituationen und damit verschiedene Differenzdruckwerte $dp$1,... des Differenzdrucks $\Delta p$ und Hubwerte $h$ der Ventilhubstellung des Heizkörperregelventils dar.

Fig. 2 zeigt entsprechende Kennlinien für ein Druck-unabhängiges Regelventil, das unabhängig von dem am Regelventil anliegenden Heizungsanlagendruck den Differenzdruck $\Delta p$ über das Heizkörperregelventil konstant hält. Ein solches Druck-unabhängiges Regelventil besteht aus einem herkömmlichen Heizkörperregelventil und einem integrierten Differenzdruckregler, der den Differenzdruck $\Delta p$ konstant auf den Differenzdruckwert $dp$ einregelt.

In diesem Fall hängt der Volumenstrom $\dot{V}$ nur von dem (ggf. mit einer Voreinstellung einstellbaren) Durchflusskoeffizienten der Öffnung des Heizkörperregelventils und von der Ventil-Hubstellung $h$ ab. Die optionale Voreinstellung des Durchflusskoeffizienten des Heizkörperregelventils sollte plombierbar sein, ebenso wie eine optionale Einstellung des maximal möglichen Ventilhubs des Heizkörperregelventils.

Weil der Differenzdruck $\Delta p$ über dieses Ventil konstant ist, hängt der Volumenstrom $\dot{V}$ nur noch von dem Ventilhub $h$ und ggf. von einer möglichen Voreinstellung des Durchflusskoeffizienten sowie und zusätzlich ggfls. von einer zusätzlich einstellbaren Begrenzung des maximalen Ventilhubs ab.

Fig. 2b zeigt eine mit Fig. 1b vergleichbare Abhängigkeit für den Volumenstrom $\dot{V}$ von dem Ventilhub $h,$ wobei sich infolge einer veränderbaren Voreinstellung die Kennlinie verschiebt, wie durch die gestrichelte Kennlinie beispielhaft für Kv/2 gezeigt ist. Das gemäß Fig. 1c vorhandenes Kennlinienfeld reduziert sich damit auf die eine in Fig. 2c dargestellte Kennlinie.

Diese Kennlinie gemäß Fig. 2b bzw. Fig. 2c oder das Kennlinienfeld gemäß Fig. 1c werden erfindungsgemäß verwendet, um bei einem Differenzdruckgeregelten Heizkörperregelventil mit integriertem Differenzdruckregler oder bei einem herkömmlichen Heizkörperregelventil den Volumenstrom $\dot{V}$ durch das Heizkörperregelventil (und damit den Heizkörper) zu bestimmen. Hieraus kann dann die abgegebene Wärmemenge, wie bereits beschrieben, berechnet werden. Dieses Verfahren zur Bestimmung der abgegebenen Wärmemenge $\Delta Q$ ist besonders vorteilhaft, weil keine Kenngröße des Heizkörpers zur Berechnung der abgegebenen Wärmemenge bekannt sein muss.

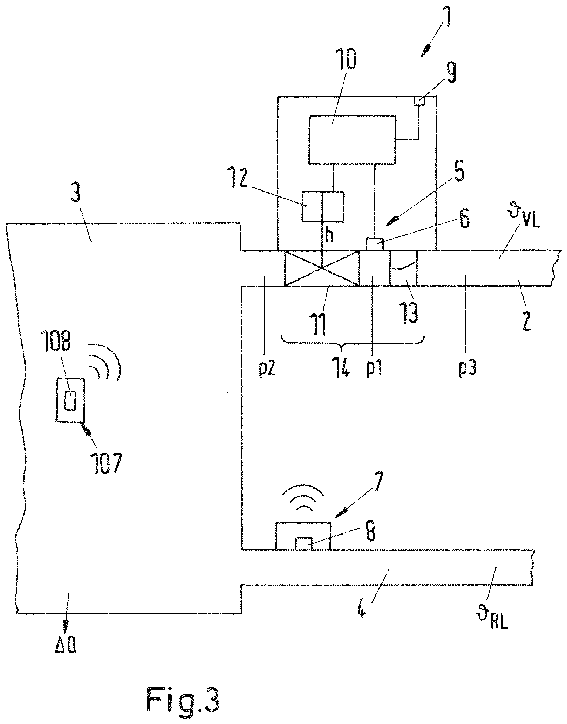

Mit Bezug auf Fig. 3 wird nachfolgend eine besonders bevorzugte Ausführungsform eines erfindungsgemäßen Heizkostenverteilers 1 beschrieben.

Der Heizkostenverteiler 1 ist am Vorlauf 2 eines Heizkörpers 3 angeordnet. Durch den Vorlauf 2 strömt ein nicht dargestelltes Wärmeträgermedium mit der Vorlauftemperatur $\vartheta_{VL}$ in den Heizkörper 3, der die Wärmemenge $\Delta Q$ abgibt. Dabei kühlt sich das Wärmeträgermedium auf die Rücklauftemperatur $\vartheta_{RL}$ ab. Mit dieser Rücklauftemperatur $\vartheta_{RL}$ strömt das Wärmeträgermedium durch den Rücklauf 4 wieder aus dem Heizkörper 3 heraus.

Der Heizkostenverteiler 1 weist einen Vorlauftemperatursensor 5 mit einem Temperaturfühler 6 zur Messung der Vorlauftemperatur $\vartheta_{VL}$ auf, der beispielsweise als Anlegefühler an dem Vorlauf 2 anliegt und in das Gehäuse des Heizkostenverteilers 1 mit integriert ist. Ferner weist der Heizkostenverteiler 1 einen Heizkörpertemperatursensor 7 zur Messung der Rücklauftemperatur $\vartheta_{RL}$ als Heizkörpertemperatur auf. Auch der Heizkörpertemperaturfühler 8 ist beispielsweise als Anlegefühler ausgebildet und in ein von dem Heizkostenverteiler 1 separates Gehäuse des Heizkörpertemperatursensors 7 aufgenommen. In dem dargestellten Beispiel kommuniziert der Heizkörpertemperatursensor 7 die

gemessene Rücklauftemperatur $\vartheta_{RL}$ über eine Drahtloskommunikation an den Heizkostenverteiler 1. Alternativ kann auch eine kabelgebundene Kommunikation stattfinden.

In einer alternativen Ausgestaltung weist der Heizkostenverteiler 1 als Heizkörpertemperatursensor anstelle des Heizkörpertemperatursensors 7 einen Heizkörpertemperatursensor 107 zur Messung der Heizkörperoberflächentemperatur $\vartheta_{HK}$ mit einem Heizkörpertemperaturfühler 108 zur Messung der Heizkörperoberflächentemperatur $\vartheta_{HK}$ auf. Auch der Heizkörpertemperaturfühler 108 ist beispielsweise als Anlegefühler ausgebildet und in wärmeleitendem Kontakt mit der Oberfläche des Heizkörpers 3 an diesem festgelegt. In bereits beschriebener Weise kann aus der gemessenen Heizkörperoberflächentemperatur $\vartheta_{HK}$ auf die Rücklauftemperatur $\vartheta_{RL}$ rückgeschlossen werden, wie auch Fig. 4 erläutert. Beide Varianten des Heizkörpertemperatursensors 7 und des Heizkörpertemperatursensors 107 sind daher gleichwertig.

In dem dargestellten Beispiel überträgt auch der Heizkörpertemperatursensor 107 die gemessene Heizkörperoberflächentemperatur $\vartheta_{HK}$ drahtlos an den Heizkostenverteiler 1. Alternativ ist auch hier eine drahtgebundene Übertragung denkbar.

Optional kann der Heizkörpertemperatursensor 7 und/oder der Heizkostenverteiler 1 auch einen Temperaturfühler 9 zur Messung der Raumtemperatur $\vartheta_{Raum}$ aufweisen. Sämtliche Temperaturwerte $\vartheta_{RL}$, $\vartheta_{HK}$, $\vartheta_{VL}$ und/oder $\vartheta_{Raum}$ werden einer Recheneinheit 10 des Heizkostenverteilers 1 übermittelt, die zur Durchführung des erfindungsgemäßen Verfahrens zur Heizkostenverteilung eingerichtet ist.

Vorzugsweise ist die Recheneinheit 10 zusätzlich zur Raumtemperaturregelung des Raumes eingerichtet, in dem sich der Heizkörper 3 befindet. Hierzu weist der Heizkostenverteiler 1 ein Heizkörperregelventil 11 auf, dessen Hub $h$ durch einen von der Recheneinheit 10 angesteuerten, vorzugsweise elektromotorisch betriebenen Stellantrieb 12 veränderbar ist, indem ein Ventilstößel in dem Heizkörperregelventil 11 die verbleibende Durchgangsöffnung in dem Heizkörperregelventil weiter schließt oder weiter öffnet.

Der Volumenstrom $\dot{V}$ durch das Heizkörperregelventil 11 hängt von der Druckdifferenz $\Delta p$ über das Heizkörperregelventil 11 und von einer ggfls. vorgesehenen Voreinstellung und von dem Ventilhub $h,$ d.h. die verbleibende Durchgangsöffnung in dem Heizkörperregelventil 11, ab. Der Differenzdruck $\Delta p$ kann grundsätzlich durch die Druckdifferenz p1 - p2 ermittelt werden, wozu der Heizkostenverteiler 1 optional erste und zweite Drucksensoren oder alternativ eine differenzdruckgebende Sensorik aufweisen könnte, wie aus dem Stand der Technik bekannt.. Die Hubstellung $h$ ist in der Recheneinheit 10 des Heizkostenverteilers bekannt, da die Recheneinheit 10 den Stellantrieb 12 ansteuert. Mit diesen Werten kann aus der Kennlinie gemäß Fig. 1c in der bereits ausführlich beschriebenen Weise der Volumenstrom $\dot{V}$ abgelesen und die abgegebene Wärmemenge $\Delta Q$ des Heizkörpers 3 bestimmt werden.

In der in Fig. 3 als erfindungsgemäße Ausführungsform dargestellten Ausführungsform ist in das Heizkörperregelventil 11 ein Differenzdruckregler 13 integriert. Ein solches Ventil wird auch als Druck-unabhängiges Regelventil 14 bezeichnet. In diesem Fall reduziert sich das Kennlinienfeld (bei konstanter Voreinstellung) gemäß Fig. 1c auf eine einzige Kennlinie. In Fig. 2b ist die Betriebskennlinie für konstanten Differenzdruck und für 2 Voreinstellungen dargestellt. Auch dies wurde bereits ausführlich beschrieben.

Damit stellt diese bevorzugte Ausführungsform eine besonders einfache Möglichkeit dar, die durch den Heizkörper 3 abgegebene Wärmemenge $\Delta Q$ unter Verwendung einer einfachen Kennlinie des Heizkörperregelventils 11 zu ermitteln. Die Kennlinie ist entweder durch den Hersteller des Heizkörperregelventils 11 bekannt oder kann auf einem Messstand einfach gemessen werden. Die Messung dieser einfachen Kennlinie stellt einen wesentlich weniger hohen Aufwand dar, als die Bestimmung des gesamten Kennlinienfeldes gemäß Fig. 1c.

Auch das Kennlinienfeld gemäß Fig. 1c kann jedoch in einem Teststand vermessen werden und ist von Heizkörperkenndaten unabhängig, so dass auch hierdurch eine Unabhängigkeit der Verbrauchserfassung von Heizkörperkenndaten erreicht wird.

Bezugszeichenliste:

| | |
|---|---|
| 1 | Heizkostenverteiler |
| 2 | Vorlauf |
| 3 | Heizkörper |
| 4 | Rücklauf |
| 5 | Vorlauftemperatursensor |
| 6 | Temperaturfühler zur Messung der Vorlauftemperatur |
| 7 | Heizkörpertemperatursensor zur Messung der Rücklauftemperatur |
| 8 | Heizkörpertemperaturfühler zur Messung der Rücklauftemperatur |
| 9 | Temperaturfühler zur Messung der Raumtemperatur |
| 10 | Recheneinheit |

11    Heizkörperregelventil
12    Stellantrieb
13    Differenzdruckregler
14    Druck-unabhängiges Regelventil

107    Heizkörpertemperatursensor zur Messung der Heizkörperoberflächentemperatur
108    Heizkörpertemperaturfühler zur Messung der Rücklauftemperatur


**Patentansprüche**

1.    Heizkostenverteiler zur Erfassung der durch einen Heizkörper (3) abgegebenen Wärmemenge ($\Delta Q$)

- mit einem Vorlauftemperatursensor (5) zur Messung der Vorlauftemperatur ($\vartheta_{VL}$) eines Wärmeträgermediums,
- mit einem Heizkörpertemperatursensor (7, 107) zur Messung einer Heizkörpertemperatur ($\vartheta_{RL}, \vartheta_{HK}$) und
- mit einer Recheneinheit (10), welche zur Bestimmung der abgegebenen Wärmemenge ($\Delta Q$) eingerichtet ist,

wobei

- der Heizkostenverteiler (1) ein Heizkörperregelventil (11) mit einer bekannten und gegebenenfalls voreinstellbaren Betriebskennlinie für den Zusammenhang zwischen der Ventilhubstellung ($h$) und dem Volumenstrom ($\dot{V}$) bei einem bekannten Differenzdruck ($\Delta p$) des Wärmeträgermediums über das Heizkörperregelventil (11) umfasst, wobei der Differenzdruck ($\Delta p$) über das Heizkörperregelventil (11) im Arbeitspunkt bekannt ist,
- der Heizkostenverteiler (1) eine Einrichtung zur Ermittlung der Ventilhubstellung (h) des Heizkörperregelventils (11) aufweist und
- die Recheneinheit (10) des Heizkostenverteilers (1) dazu eingerichtet ist, die abgegebene Wärmemenge ($\Delta Q$) aus den Größen Ventilhubstellung ($h$), Vorlauftemperatur ($\vartheta_{VL}$) sowie Heizkörpertemperatur ($\vartheta_{RL}, \vartheta_{HK}$) unter Verwendung der Betriebskennlinie des Heizkörperregelventils (11) für den bekannten Differenzdruck ($\Delta p$) zu berechnen,

**dadurch gekennzeichnet, dass** das Heizkörperregelventil (11) einen Differenzdruckregler enthält, der unabhängig von einem im Heizungssystem anliegenden Anlagendruck den Differenzdruck ($\Delta p$) über dem Heizkörperregelventil (11) konstant hält.

2.    Heizkostenverteiler nach Anspruch 1, **dadurch gekennzeichnet, dass** der Maximalhub des Heizkörperregelventils (11) mit integriertem Differenzdruckregler (13) gegenüber dem bauartbedingten Maximalhub begrenzbar ist.

3.    Heizkostenverteiler nach einem der vorhergehenden Ansprüche, **dadurch gekennzeichnet, dass** die Recheneinheit (10) des Heizkostenverteilers (1) dazu eingerichtet ist, einen plausiblen Bereich für eine Heizkörpertemperatur ($\vartheta_{RL}$, $\vartheta_{HK}$) aus dem ermittelten Ventilhub ($h$), dem der Betriebskennlinie des Heizkörperregelventils (11) entsprechenden Volumenstrom ($\dot{V}$), der Vorlauftemperatur ($\vartheta_{VL}$) und einer typischen Heizlast zu bestimmen und mit der gemessenen Heizkörpertemperatur ($\vartheta_{RL}, \vartheta_{HK}$) zu vergleichen.

4.    Heizkostenverteiler nach einem der vorhergehenden Ansprüche, **dadurch gekennzeichnet, dass** der Heizkörpertemperatursensor (7) zur Messung der Heizkörpertemperatur einen Temperaturfühler (8) zur Messung der Rücklauftemperatur ($\vartheta_{RL}$) des Wärmeträgermediums am Rücklauf (4) des Heizkörpers (3) aufweist.

5.    Heizkostenverteiler nach einem der vorhergehenden Ansprüche, **dadurch gekennzeichnet, dass** der Heizkörpertemperatursensor (7, 107) und/oder der Heizkostenverteiler (1) zur Messung der Heizkörpertemperatur einen Temperaturfühler (9) zur Messung der Raumtemperatur ($\vartheta_{Raum}$) aufweist.

6.    Heizkostenverteiler nach Anspruch 5, **dadurch gekennzeichnet, dass** der Heizkörpertemperatursensor (107) zur Messung der Heizkörpertemperatur einen Temperaturfühler (108) zur Messung der Heizkörperoberflächentemperatur ($\vartheta_{HK}$) an einer definierten Messposition des Heizkörpers (3) aufweist.

7.    Heizkostenverteiler nach einem der vorhergehenden Ansprüche, **dadurch gekennzeichnet, dass** der Heizkostenverteiler (1) eine Raumtemperaturregelung mit einem elektromotorischen Stellantrieb (12) zur Einstellung des Ventilhubs ($h$) und mit einer Recheneinheit (10) aufweist, die dazu eingerichtet ist, die mit einem Raumtemperaturfühler

(9) gemessene Raumtemperatur ($\vartheta_{Raum}$) mit einem vorgegebenen Sollwert für die Raumtemperatur ($\vartheta_{Raum}$) zu vergleichen und eine sich aus dem Vergleich ergebende Regelabweichung durch Einstellung des Ventilhubs ($h$) auszugleichen.

8. Heizkostenverteiler nach einem der vorhergehenden Ansprüche, **dadurch gekennzeichnet, dass** eine separate Energieversorgung vorgesehen ist, welche nur die zur Verbrauchskostenerfassung notwendigen Funktionen mit Strom versorgt.

9. Verfahren zur Erfassung der durch einen Heizkörper (3) abgegebenen Wärmemenge ($\Delta Q$) auf Grundlage einer gemessenen Vorlauftemperatur ($\vartheta_{VL}$) und einer gemessenen Heizkörpertemperatur ($\vartheta_{RL}$, $\vartheta_{HK}$, $\vartheta_{Raum}$) des Wärmeträgermediums am Heizkörper (3), wobei der Ventilhub ($h$) eines Heizkörperregelventils (11) ermittelt wird und die abgegebene Wärmemenge ($\Delta Q$) aus den Größen Ventilhubstellung ($h$), Vorlauftemperatur ($\vartheta_{VL}$) sowie Heizkörpertemperatur ($\vartheta_{RL}$, $\vartheta_{HK}$, $\vartheta_{Raum}$) unter Verwendung einer gegebenenfalls voreinstellbaren Betriebskennlinie des Heizkörperregelventils (11) und eines im Arbeitspunkt bekannten Differenzdrucks ($\Delta p$) des Wärmeträgermediums über das Heizkörperregelventil (11) berechnet wird, wobei die gegebenenfalls voreinstellbare Betriebskennlinie den Zusammenhang zwischen der Hubstellung ($h$) und dem Volumenstrom ($\dot{V}$) bei dem bekannten Differenzdruck ($\Delta p$) herstellt, **dadurch gekennzeichnet, dass** aufgrund der Verwendung eines Heizkörperregelventils (11), das einen Differenzdruckregler (13) enthält, der unabhängig von einem im Heizungssystem anliegenden Anlagendruck den Differenzdruck ($\Delta p$) über dem Heizkörperregelventil (11) konstant hält, der Differenzdruck ($\Delta p$) bekannt ist.

10. Verfahren nach Anspruch 9, **dadurch gekennzeichnet, dass** überprüft wird, ob eine aus dem ermittelten Ventilhub ($h$), dem der gegebenenfalls voreinstellbaren Betriebskennlinie entsprechenden Volumenstrom ($\dot{V}$), der Vorlauftemperatur ($\vartheta_{VL}$) und einer typischen Heizlast ($\Delta Q$) ermittelte Heizkörpertemperatur ($\vartheta_{HK}$, $\vartheta_{RL}$) des Wärmeträgermediums innerhalb eines plausiblen Bereichs um die gemessene Heizkörpertemperatur ($\vartheta_{HK}$, $\vartheta_{RL}$) liegt.

**Claims**

1. A heat cost allocator for recording the quantity of heat ($\Delta Q$) emitted by a radiator (3)

   - with an inlet flow temperature sensor (5) for measuring the inlet flow temperature ($\vartheta_{VL}$) of a heat transfer medium,
   - with a radiator temperature sensor (7, 107) for measuring a radiator temperature ($\vartheta_{RL}$, $\vartheta_{HK}$) and
   - with a computing unit (10), which is set up to determine the quantity of heat ($\Delta Q$) emitted,

   wherein

   - the heat cost allocator (1) comprises a radiator control valve (11) with a known and optionally preset operating characteristic for the relationship between the valve lift position (h) and the volumetric flow rate (V) at a known differential pressure ($\Delta p$) of the heat transfer medium across the radiator control valve (11), wherein the differential pressure ($\Delta p$) across the radiator control valve (11) is known at the operating point,
   - the heat cost allocator (1) has a device for determining the valve lift position (h) of the radiator control valve (11), and
   - the computing unit (10) of the heat cost allocator (1) is set up to calculate the delivered heat quantity ($\Delta Q$) from the variables: valve lift position (h), flow temperature ($\vartheta_{VL}$) and radiator temperature ($\vartheta_{RL}$, $\vartheta_{HK}$), using the operating characteristic of the radiator control valve (11) for the known differential pressure ($\Delta p$),

   **characterised in that**,
   the radiator control valve (11) contains a differential pressure regulator, which keeps the differential pressure ($\Delta p$) across the radiator control valve (11) constant independently of a system pressure present in the heating system.

2. The heat cost allocator in accordance with claim 1,
   **characterised in that**,
   the maximum lift of the radiator control valve (11) with an integrated differential pressure regulator (13) can be limited in relation to the design-related maximum lift.

3. The heat cost allocator in accordance with one of the preceding claims,
   **characterised in that**,
   the computing unit (10) of the heat cost allocator (1) is set up to determine a plausible range for a radiator temperature

($\vartheta_{RL}$, $\vartheta_{HK}$) from the determined valve lift *(h)*, the volumetric flow rate (*V*) corresponding to the operating characteristic of the radiator control valve (11), the inlet flow temperature ($\vartheta_{VL}$) and a typical heating load and to compare this with the measured radiator temperature ($\vartheta_{RL}$, $\vartheta_{HK}$).

4. The heat cost allocator in accordance with one of the preceding claims,
**characterised in that**,
the radiator temperature sensor (7) for measuring the radiator temperature has a temperature sensor (8) for measuring the outlet flow temperature ($\vartheta_{RL}$) of the heat transfer medium at the outlet (4) of the radiator (3) .

5. The heat cost allocator in accordance with one of the preceding claims,
**characterised in that**,
the radiator temperature sensor (7, 107) and/or the heat cost allocator (1) for measuring the radiator temperature has a temperature sensor (9) for measuring the room temperature ($\vartheta_{Raum}$).

6. The heat cost allocator in accordance with claim 5,
**characterised in that**,
the radiator temperature sensor (107) for measuring the radiator temperature has a temperature sensor (108) for measuring the radiator surface temperature ($\vartheta_{HK}$) at a defined measuring position on the radiator (3) .

7. The heat cost allocator in accordance with one of the preceding claims,
**characterised in that**,
the heat cost allocator (1) has a room temperature control with an electromotive actuator (12) for setting the valve lift (*h*) and with a computing unit (10) that is set up to compare the room temperature ($\vartheta_{Raum}$) measured with a room temperature sensor (9) with a predetermined set point value for the room temperature ($\vartheta_{Raum}$), and to compensate for a control deviation resulting from the comparison by setting the valve lift (*h*).

8. The heat cost allocator in accordance with one of the preceding claims,
**characterised in that**,
a separate power supply is provided, which only supplies the functions necessary for recording consumption costs with electricity.

9. A method for recording the quantity of heat ($\Delta Q$) emitted by a radiator (3) on the basis of a measured inlet flow temperature ($\vartheta_{VL}$) and a measured radiator temperature ($\vartheta_{RL}$, $\vartheta_{HK}$, $\vartheta_{Raum}$) of the heat transfer medium on the radiator (3), wherein the valve lift (*h*) of a radiator control valve (11) is determined and the emitted heat quantity ($\Delta Q$) is calculated from the variables: valve lift position (*h*), flow temperature ($\vartheta_{VL}$) and radiator temperature ($\vartheta_{RL}$, $\vartheta_{HK}$, $\vartheta_{Raum}$) using an operating characteristic of the radiator control valve (11), which can be preset if appropriate, and a differential pressure ($\Delta p$) of the heat transfer medium across the radiator control valve (11) known at the operating point, wherein
the operating characteristic, which can be preset if appropriate, establishes the relationship between the lift position (*h*) and the volumetric flow rate (*V*) at the known differential pressure ($\Delta p$),
**characterised in that**,
the differential pressure ($\Delta p$) across the radiator control valve (11) is known, by virtue of the use of a radiator control valve (11), which contains a differential pressure regulator (13) which keeps the differential pressure ($\Delta p$) across the radiator control valve (11) constant independently of a system pressure present in the heating system.

10. The method in accordance with claim 9,
**characterised in that**,
a check is made as to whether a radiator temperature ($\vartheta_{HK}$, $\vartheta_{RL}$) of the heat transfer medium determined from the valve lift (h) determined, the volumetric flow rate (*V*) corresponding to the operating characteristic, which can be preset if appropriate, the inlet flow temperature ($\vartheta_{VL}$) and a typical heating load ($\Delta Q$) lies within a plausible range around the measured radiator temperature ($\vartheta_{HK}$, $\vartheta_{RL}$).

**Revendications**

1. Répartiteur de frais de chauffage pour la saisie de la délivrance de chaleur ($\Delta Q$) d'un radiateur (3)

   - avec un capteur de température d'arrivée (5) pour mesurer la température d'arrivée ($\vartheta_{VL}$) d'un milieu caloporteur,
- avec un capteur de température de radiateur (7, 107) pour mesurer une température de radiateur ($\vartheta_{RL}$, $\vartheta_{HK}$), et
- avec une unité de calcul (10), laquelle est agencée pour déterminer la délivrance de chaleur ($\Delta Q$),
- le répartiteur de frais de chauffage (1) comprenant une vanne de régulation de radiateur (11) avec une caractéristique de fonctionnement connue et pouvant être préréglée le cas échéant pour la corrélation entre le réglage de la course de vanne ($h$) et le débit volumétrique ($V$) à une pression différentielle connue ($\Delta p$) du milieu caloporteur sur la vanne de régulation du radiateur (11), la pression différentielle ($\Delta p$) sur la vanne de régulation de radiateur (11) étant connue au point de fonctionnement,
- le répartiteur de frais de chauffage (1) comportant un dispositif pour déterminer le réglage de la course de vanne (h) de la vanne de régulation de radiateur (11), et
- l'unité de calcul (10) du répartiteur de frais de chauffage (1) étant agencée pour calculer la délivrance de chaleur ($\Delta Q$) à partir des valeurs de réglage de la course de vanne ($h$), de la température d'arrivée ($\vartheta_{VL}$), ainsi que de la température du radiateur ($\vartheta_{RL}$, $\vartheta_{HK}$) en utilisant la caractéristique de fonctionnement de la vanne de régulation de radiateur (11) pour la pression différentielle connue ($\Delta p$),

**caractérisé en ce que** la vanne de régulation de radiateur (11) contient un régulateur de pression différentielle, qui maintient constante la pression différentielle ($\Delta p$) sur la vanne de régulation de radiateur (11) en fonction d'une pression d'installation attenante dans le système de chauffage.

2. Répartiteur de frais de chauffage selon la revendication 1, **caractérisé en ce que** la course maximale de la vanne de régulation de radiateur (11) peut être limitée avec un régulateur de pression différentielle (13) intégré par rapport à la course maximale en fonction du type de construction.

3. Répartiteur de frais de chauffage selon l'une quelconque des revendications précédentes, **caractérisé en ce que** l'unité de calcul (10) du répartiteur de frais de chauffage (1) est agencé pour déterminer une plage plausible pour une température de radiateur ($\vartheta_{RL}$, $\vartheta_{HK}$) à partir de la course de vanne (h), du débit volumétrique (V) correspondant à la caractéristique de fonctionnement de la vanne de régulation de radiateur (11), de la température d'arrivée ($\vartheta_{VL}$) et d'une charge calorifique caractéristique et comparer à la température du radiateur mesurée ($\vartheta_{RL}$, $\vartheta_{HK}$).

4. Répartiteur de frais de chauffage selon l'une quelconque des revendications précédentes, **caractérisé en ce que** le capteur de température de radiateur (7) pour la mesure de la température de radiateur comporte une sonde de température (8) pour mesurer la température de retour ($\vartheta_{RL}$) du milieu caloporteur sur le retour (4) du radiateur (3).

5. Répartiteur de frais de chauffage selon l'une quelconque des revendications précédentes, **caractérisé en ce que** le capteur de température du radiateur (7,107) et/ou le répartiteur de frais de chauffage (1) pour la mesure de la température du radiateur comporte une sonde de température (9) pour mesurer la température ambiante ($\vartheta_{Amb}$).

6. Répartiteur de frais de chauffage selon la revendication 5, **caractérisé en ce que** le capteur de température du radiateur (107) pour la mesure de la température du radiateur comporte une sonde de température (108) pour mesurer la température de surface du radiateur ($\vartheta_{HK}$) à une position de mesure définie du radiateur (3).

7. Répartiteur de frais de chauffage selon l'une quelconque des revendications précédentes, **caractérisé en ce que** le répartiteur de frais de chauffage (1) comporte une régulation de la température ambiante avec un mécanisme de commande à moteur électrique (12) pour régler la course de vanne (h) et avec une unité de calcul (10), qui est agencée pour comparer la température ambiante ($\vartheta_{Amb}$) mesurée avec une sonde de température ambiante (9) à une valeur théorique prédéfinie pour la température ambiante ($\vartheta_{Amb}$) et compenser un écart de régulation résultant de la comparaison par un réglage de la course de vanne (h).

8. Répartiteur de frais de chauffage selon l'une quelconque des revendications précédentes, **caractérisé en ce qu'**une alimentation en énergie séparée est prévue, laquelle alimente en courant uniquement les fonctions nécessaires à la saisie des frais de consommation.

9. Méthode destinée à la saisie de délivrance de chaleur ($\Delta Q$) par un radiateur (3) sur la base d'une température d'arrivée mesurée ($\vartheta_{VL}$) et d'une température du radiateur mesurée ($\vartheta_{RL}$, $\vartheta_{HK}$, $\vartheta_{Amb}$) du milieu caloporteur sur le radiateur (3), la course de vanne (h) d'une vanne de régulation de radiateur (11) étant déterminée et la délivrance de chaleur ($\Delta Q$) étant calculée à partir des valeurs de réglage de la course de vanne (h), de la température d'arrivée ($\vartheta_{VL}$), ainsi que de la température du radiateur ($\vartheta_{RL}$, $\vartheta_{HK}$, $\vartheta_{Amb}$) en utilisant la caractéristique de fonctionnement pouvant être préréglée le cas échéant de la vanne de régulation de radiateur (11) et d'une pression différentielle

($\Delta$p) connue au point de fonctionnement du milieu caloporteur sur la vanne de régulation de radiateur (11), la caractéristique de fonctionnement pouvant être préréglée le cas échéant établissant la corrélation entre le réglage de course (h) et le débit volumétrique (V) à la pression différentielle ($\Delta$Q) connue, **caractérisée en ce qu'**en raison de l'utilisation d'une vanne de régulation de radiateur (11) qui contient un régulateur de pression différentielle (13), qui maintient constante la pression différentielle ($\Delta$p) sur la vanne de régulation de radiateur (11) en fonction d'une pression d'installation attenante dans le système de chauffage, la pression différentielle ($\Delta$p) est connue.

10. Répartiteur de frais de chauffage selon la revendication 9, **caractérisé en ce qu'**un contrôle est effectué pour vérifier si une température de radiateur ($\vartheta_{HK}$, $\vartheta_{RL}$) du milieu caloporteur déterminée à partir de la course de vanne (h) déterminée, du débit volumétrique (V) correspondant à la caractéristique de fonctionnement pouvant être préréglée le cas échéant, de la température d'arrivée ($\vartheta_{VL}$) et d'une charge calorifique caractéristique ($\Delta$Q), se situe à l'intérieur d'une plage plausible autour de la température de radiateur mesurée ($\vartheta_{HK}$, $\vartheta_{RL}$).

Fig.1a

Fig.1b

Fig.1c

Fig.2a

21

Fig.2b

Fig.2c

EP 3 217 157 B1

Fig.3

24

Fig.4

# EP 3 217 157 B1

**IN DER BESCHREIBUNG AUFGEFÜHRTE DOKUMENTE**

**In der Beschreibung aufgeführte Patentdokumente**

- DE 29710248 U1
- DE 3243198 A1
- EP 2068138 A2